(19) **Europäisches Patentamt European Patent Office Office européen des brevets**

(11) **EP 1 329 627 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(51) Int Cl.:
*F02D 41/14* *(2006.01)*      *F02D 41/02* *(2006.01)*

(21) Anmeldenummer: **03000578.9**

(22) Anmeldetag: **13.01.2003**

(54) **Verfahren und Vorrichtung zum Steuern einer Bauteilschutzfunktion**

Method and apparatus for controlling of a component protection function

Procédé et dispositif de contrôle d'une fonction de protection de composants

(84) Benannte Vertragsstaaten:
**DE FR GB**

(30) Priorität: **16.01.2002 DE 10201465**

(43) Veröffentlichungstag der Anmeldung:
**23.07.2003 Patentblatt 2003/30**

(73) Patentinhaber:
• **Bayerische Motoren Werke Aktiengesellschaft 80809 München (DE)**
• **SIEMENS AKTIENGESELLSCHAFT 80333 München (DE)**

(72) Erfinder:
• **Kofler, Franz 80807 München (DE)**
• **Oehlschläger, Rene 83138 Lappersdorf (DE)**

(74) Vertreter: **Vossius & Partner Siebertstrasse 4 81675 München (DE)**

(56) Entgegenhaltungen:
EP-A- 0 890 724      US-A- 5 570 575
US-A- 5 857 163      US-B1- 6 286 305

**Beschreibung**

Die vorliegende Erfindung betrifft ein Verfahren und eine Vorrichtung zum Steuern einer Bauteilschutzfunktion für einen Katalysator eines Verbrennungsmotors. Bei Verbrennungsmotoren zum Antrieb von Kraftfahrzeugen werden Katalysatoren zur Abgasreinigung eingesetzt. Solche Katalysatoren müssen vor einer Überhitzung geschützt werden. Insbesondere bei motornaher Anordnung des Katalysators kann es bei hohem Gemischdurchsatz zu hohen Bauteiltemperaturen der Abgasanlage von größer als 900°C kommen.

Es ist bekannt, hohen Abgastemperaturen entgegenzuwirken, indem mit Hilfe der Motorsteuerung für den Verbrennungsmotor das Luft-Kraftstoff-Verhältnis derart eingestellt wird, daß die Abgastemperatur auf ein bauteilsicheres Niveau gehalten werden kann. Hierzu weisen Motorsteuerungen einen Algorithmus auf, mit dem das Luft-Kraftstoff-Verhältnis Lambda kleiner 1 eingestellt wird. Dieser Bauteilschutz basiert physikalisch auf dem Prinzip, daß bei Konstanz anderer Einflüsse die Abgastemperatur und damit die Katalysatortemperatur sinkt.

In heutigen Motorsteuerungen gibt es ein Abgastemperaturmodell, mit dem eine Abgas-Modelltemperatur errechnet werden kann in Abhängigkeit von verschiedenen Einflußparametern motorspezifische, fahrzeugspezifische und umweltspezifische Einflußfaktoren. Diese Abgas-Modelltemperatur wird von verschiedenen Funktionen in der Motorsteuerung weiterverwendet. Bisherige Systeme verwenden diese Abgastemperatur auch als Reglerparameter oder als Einschaltbedingung für den Katalysatorschutz im Katalysatorschutzmodell, wobei die Auslegung des Reglers oder für den gesteuerten Katalysatorschutz als eigenständiger Aufwand besteht.

In der DE 199 28 561 A1 wird ein Verfahren zur Schätzung von Temperaturgrößen im Abgasstrang eines Verbrennungsmotors beschrieben, bei dem eine Abgastemperatur bestimmt wird als Funktion von verschiedenen Einflußparametern.

Aus der US 5 857 163 ist eine adaptive Motorsteuerung bekannt, bei der die Motorsteuerung auf Basis einer Abschätzung des Nachlassens bzw Alterns eines Katalysators durchgeführt wird. Die Abschätzung des Nachlassens des Katalysators erfolgt dabei unter anderem durch Bestimmen der Katalysatortemperatur $T_{cat}$ Die Katalysatortemperatur $T_{cat}$ kann dabei durch Vorsehen einer Kalibrierungstemperatursonde, die auf oder nahe dem Katalysator angeordnet ist, während einer herkömmlichen Kalibrierungsprozedur direkt gemessen werden. Um die Katalysatortemperatur $T_{cat}$ noch genauer abzuschätzen wird auch eine Abweichung eines gegenwärtigen Luft/Kraftstoffverhältnisses von dem stöchiometrischen Luft/Kraftstoffverhältnis mit berücksichtig.

In der US 5 570 575 ist des Weiteren eine Steuerung der Kraftstoffzufuhr in einem Verbrennungsmotor offenbart, wobei ein kurzzeitiges Abbauen oder Nachlassen des Katalysators, verhindert wird. Dies wird erreicht, indem die Kraftstoffunterbrechungssteuerung verhindert wird, um ein fettes Luft/Kraftstoffverhältnis beizubehalten, wenn bei einem Abbremsens eine hohe Temperatur im Katalysator bestimmt wird. Die. Katalysatortemperatur Tca wird in Abhängigkeit von einer Impulslänge der Kraftstoffeinspritzung Tp und einer Fahrzeuggeschwindigkeit N bestimmt,

Die US 6 286 305 offenbart weiter ein Verfahren zum Steuern der Katalysatortemperatur. Gemäß dem Verfahren wird dabei ein stabilisierter Katalysatortemperaturgrenzwert berechnet und eine stabilisierte Katalysatortemperatur ohne Anfettung bestimmt. Der stabilisierte Katalysatortemperaturgrenzwert wird dann mit der stabilisierten Kalalysatortemperatur ohne Anfettung verglichen. Ist dabei die stabilisierte Katalysatortemperatur ohne Anfettung größer als der stabilisierte Katalysatortemperaturgrenzwert, so erfolgt eine Anfettung eines Luft/Kraftstoffverhältnisses, um die Temperatur des Katalysators auf einem vorbestimmten Temperaturgrenzwert zu halten.

Die EP 0 890 724 zeigt ein Verfahren zum Betrieb eines Verbrennungsmotors. Dabei wird die Temperatur einer Abgasbehandlungsanordnung näherungsweise bestimmt mittels eines Sensors, der eine Abgastemperatur misst und eines Temperaturmolells der Abgasbehaadlungsanordnung. Bei dem Temperaturmodell wird die Temperatur der Abgasbehandlungsanordnung anhand verschiedener Parameter bestimmt, wie des Abgasstroms, der Fahrzeuggeschwindigkeit und der Umgebungstemperatur.

Der vorliegenden Erfindung liegt die Aufgabe zu Grunde, ein Verfahren und eine Vorrichtung zum Steuern einer Bauteilschutzfunktion für einen Katalysator eines Verbrennungsmotors bereitzustellen, das oder die einfach und kostengünstig zu realisieren ist.

Diese Aufgabe wird gelöst mit den Merkmalen der Patentansprüche.

Die vorliegende Erfindung beruht auf dem Grundgedanken, die Gleichung einer Abgastemperaturmodellfunktion nach dem Lambda-Einfluß umzustellen, um so ein invertiertes Abgastemperaturmodell zu erhalten. Das Abgastemperaturmodell läßt sich in folgender Gleichung darstellen:

$$T\_Abg\_Mdl = f_{T\_Abg\_Mdl}\,(C1;C2;...;\,Lambda) \qquad (1)$$

Die der Erfindung zu Grunde liegende Bauteilschutzfunktion verwendet folgende Gleichung als invertiertes Abgastemperaturmodell:

$$\text{Lambda} = f(C1;C2;...;T\_Abg\_Mdl) \qquad\qquad (2)$$

In die Gleichung (2) wird durch Einsetzen eines bauteilkritischen Grenzwens T_soll ein Lambda-Sollwert für den Bauteilschutz berechnet.

$$\text{Lambda\_soll\_BS} = f(T\_soll;\ \text{Funktion}\ T\_Abg\_Mdl) \qquad\qquad (3)$$

Die Erfindung wird nachstehend anhand von Beispielen und der Zeichnung näher erläutert. Es zeigen:

Figur 1 ein Block-Diagramm zur Erläuterung der Bauteilschutzfunktion als inverses Temperaturmodell und
Figur 2 ein Diagramm mit einem Beispiel für einen Temperaturverlauf in Abhängigkeit von der Zeit beim Einsatz der Bauteilschutzfunktion als inverse Abgastemperaturmodell.

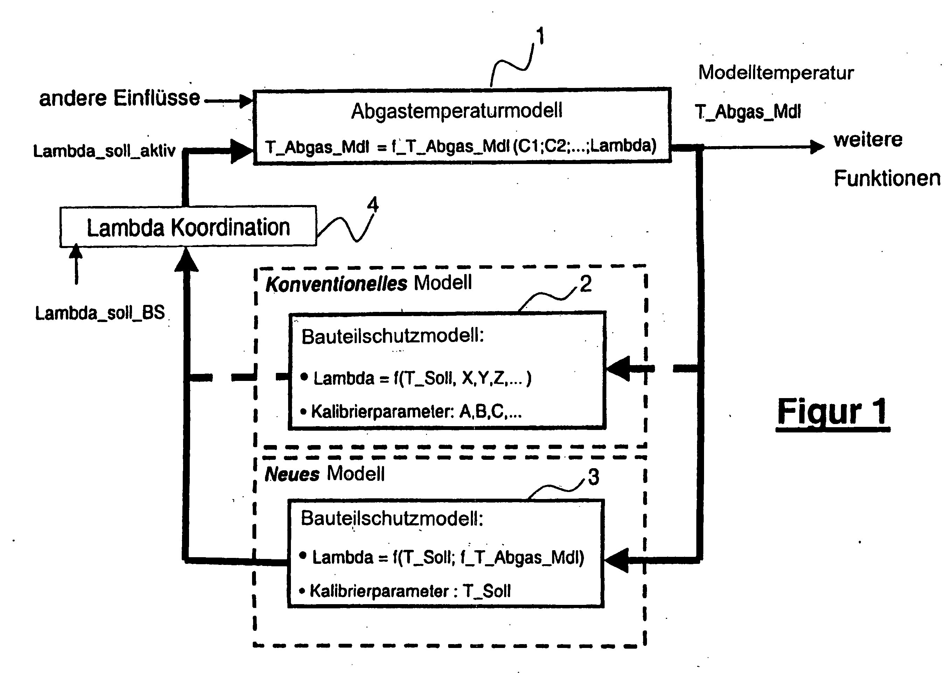

In Figur 1 ist das Block-Diagram der Bauteilschutzfunktion nach dem inversen Temperaturmodell schematisch gezeigt. Der das Abgastemperaturmodell darstellende Block 1 erhält als Eingangsgrößen verschiedene Einflußgrößen bzw. -faktoren und das Ausgabeergebnis einer Lambda-Koordination. Die Ausgangsgröße ist die Abgasmodelltemperatur T_Abg_Mdl, die das Ergebnis der Rechnung anhand der vorstehend genannten Gleichung (1) ist. Diese Abgasmodelltemperatur wird für weitere Funktionen der Motorsteuerung verwendet. Wie mit dem Block 2 "Konventionelles Modell" angegeben wird diese Abgasmodelltemperatur in dem bekannten Bauteilschutzmodell verwendet für die Berechnung eines Lambda-Werts als Funktion einer Solltemperatur T_soll und Einflußgrößen X, Y, Z... Zusätzlich werden unterschiedliche Kalibrierparameter A, B, C usw. bei dem konventionellen Modell verwendet. Nach diesem konventionellen Modell wird die Abgasmodelltemperatur nur als Reglerparameter oder Einschaltparameter verwendet, wobei die Auslegung des Reglers oder des gesteuerten Modells eigenständigen Aufwand (X, Y, Z,...; A, B, C,...) darstellt.

In Figur 1 ist außerdem als Block 3 das neue Modell gezeigt, das keinen Regler oder eigenständiges Modell darstellt, sondern auf einer Umstellung der o.g. Gleichung (1) der Abgastemperaturmodellfunktion in eine Gleichung (2) beruht, die nach dem Lambda-Einfluß umgestellt ist. In die Berechnung des Lambda-Wertes für den Bauteilschutz geht als Kalibrierparameter lediglich die Solltemperatur T_soll und die Gleichung der Abgastemperaturmodellfunktion ein. Der aufgefundene Lambda-Wert Lambda_soll_BS wird an den Block 4 "Lambda-Koordination" geliefert, der das vorstehend genannte Ausgabeergebnis als Lambda_soll_aktiv als Eingangsgröße für den Block 1, d.h. das Abgastemperaturmodell liefert.

Das angewandte physikalische Prinzip ist bei dem konventionellen und dem neuen Modell gleich, d.h. für den Bauteilschutz wird ein Gemisch mit einem Lambda < 1 eingestellt. Wie in Figur 1 gezeigt, wird bei dem konventionellen Modell auf der Basis der Abgasmodelltemperatur ein Lambda errechnet, das notwendig ist, um die bauteilkritischen Temperaturen zu halten. Dabei entsteht Applikationsaufwand von Reglerparametem (Kalibrierparameter A, B, C,...), die abgestimmt und validiert werden müssen. Der Aufwand steigt mit Variation über unterschiedliche Motorvarianten und Fahrzeugkombinationen. Der Vorteil des neuen Modells besteht darin, daß Applikation eingespart werden kann und nur noch eine Temperaturschwelle T_soll festgelegt werden muß. Dies wird dadurch erreicht, daß die Funktion als inverses Temperaturmodell (Lambda = Funktion des Abgastemperaturmodells) ausgeführt ist. Der Applikationsaufwand für das Temperaturmodell ist ohnehin vorhanden, da dieses Abgastemperaturmodell auch für andere Funktionen innerhalb der Motorsteuerung benötigt wird.

Die Erfindung hat daher den Vorteil, daß das Bauteilschutzmodell nicht mehr wie bisher ein eigenständiger Block ist, sondern als Verknüpfung mit dem Abgastemperaturmodell arbeitet. Der bisher erforderliche Applikationsaufwand, der sich mit den verschiedenen Varianten multipliziert, kann eingespart werden.

Im einzelnen beruht der Bauteilschutz auf dem inversen Pfad des Abgastemperaturmodells. Die Einschaltung der Bauteilschutzfunktion erfolgt, wenn die Abgasmodelltemperatur den Grenzwert für den Katalysatorschutz überschreitet. Der Grenzwert T_soll wird in das inverse Temperaturmodell eingesetzt und so der Einflußfaktor des Lambda errechnet. Aus einer Kennlinie wird der Lambda-Sollwert Lambda_soll ermittelt, der notwendig ist, um im Vorwärtspfad des Abgastemperaturmodells die Solltemperatur einzustellen, und zwar T_Abg_Mdl = T_soll. Die vorstehend genannte Kennlinie ist die invertierte Kennlinie aus dem Abgastemperaturmodell. In dem Block 4 Lambda-Koordination von Figur 1 wird immer der minimal geforderte Setzwert ausgewählt. Als Ausschaltbedingung der Bauteilschutzfunktion wird geprüft, ob der Lambda-Sollwert mit Bauteilschutz größer ist als der aktive Lambda-Sollwert, Lambda_soll_BS > Lambda_soll_aktiv. Das hat den Vorteil, daß keine zusätzlichen Temperaturbedingungen und Hysteresen notwendig sind.

Ein Logikwert (0,1) zeigt an, ob der Bauteilschutz aktiv oder passiv ist.

In dem Ausführungsbeispiel wird der Logikwert für den Bauteilschutz auf 1 gesetzt, wenn die dynamische Abgasmodelltemperatur den Grenzwert T_soll überschreitet. In diesem Fall wird erkannt, daß für den Bauteilschutz Lambda < 1 eingestellt werden muß, um eine Überhitzung des Katalysators zu vermeiden. Nach diesem Modell ist, wie bereits beschrieben, der Grenzwert T_soll für den Katalysatorschutz die Eingabegröße für das inverse Temperaturmodell. Abhängig von dieser Temperatur und den Einflußfaktoren für das Abgastemperaturmodell wird der Lambda-Sollwert für den Bauteilschutz für die Lambda-Koordination berechnet.

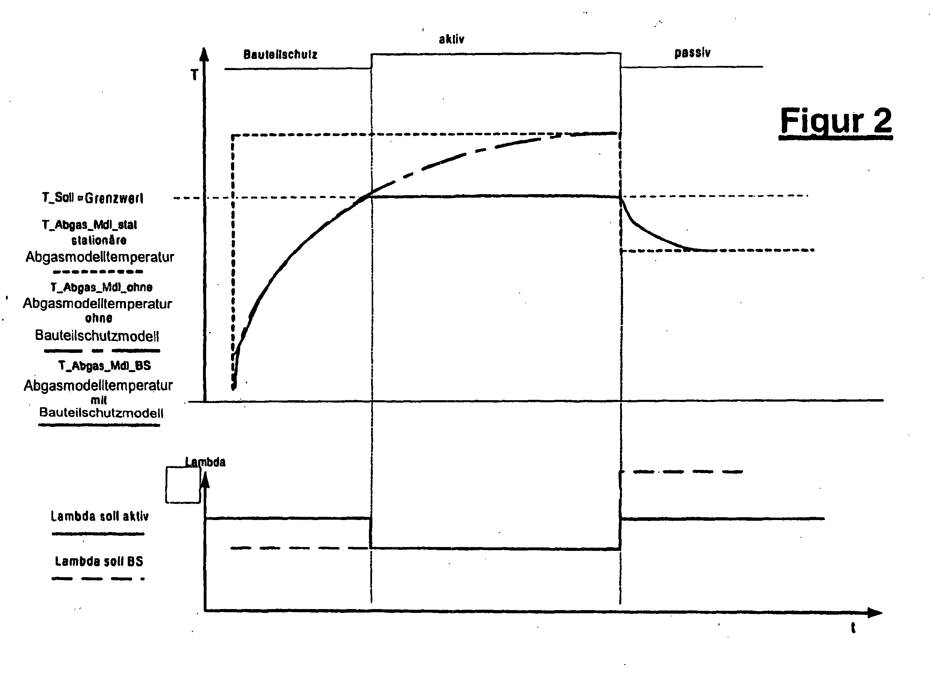

In Figur 2 ist ein Beispiel für einen Temperaturverlauf in Abhängigkeit von der Zeit beim Einsatz der Bauteilschutzfunktion als inverses Abgastemperaturmodell gezeigt. Die als Kurzstrich-Langstrich gezeichnete Linie zeigt den Temperaturverlauf, wenn kein Katalysatorbauteilschutz vorgesehen wäre. Das Diagramm zeigt auch die Kurve für den Logikwert. Dieser wechselt von 0 auf 1, sobald die Abgasmodelltemperatur T_Abg_Mdl den Grenzwert T_soll für den Bauteilschutz erreicht.

Die gestrichelte Linie zeigt den Verlauf einer stationären Abgasmodelltemperatur ohne Bauteilschutz für eine beispielhafte Betriebssituation. Die durchgezogene Linie zeigt den Verlauf der Abgasmodelltemperatur mit dem Bauteilschutzmodell. Zunächst folgt diese Kurve der Kurve für den Temperaturverlauf, wenn kein Katalysatorbauteilschutz vorgesehen wäre. Bei Erreichen des Grenzwertes T_soll wird durch Aktivieren des Bauteilschutzes erreicht, daß die Abgasmodelltemperatur nicht weiter steigt, sondern gleich dem Grenzwert T_soll ist. Das in Figur 2 ebenfalls gezeigt Zeitdiagramm für die Lambda-Werte zeigt den Kurvenverlauf für den Wert Lambda-soll-aktiv, der beim aktiven Bauteilschutz auf den Wert Lambda_Soll_ Bauteitschutz eingestellt wird. Bei Änderung der Betriebssituation des Verbrennungsmotors, die keinen Bauteilschutz mehr erfordert, was durch die Ausschaltbedingung Lambda-Soll-Bauteilschutz größer als Lambda-soll-aktiv ausgelöst wird, zeigt die Kurve für die stationäre Abgasmodelltemperatur eine Stufe nach unten und zwar in diesem Beispiel unterhalb des Grenzwertes T_soll. Wie der Verlauf der durchgezogenen Linie zeigt, geht die Abgasmodelltemperatur mit dem Bauteilschutzmodell in einer Kurve auf den Wert für die stationäre Abgasmodelltemperatur herunter.

Die vorstehende Beschreibung von bevorzugten Ausführungsformen ist lediglich als Beispiel für die vorliegende Erfindung beschrieben.

## Patentansprüche

1. Verfahren zum Steuern einer Bauteilschutzfunktion für einen Katalysator eines Verbrennungsmotors mit einer Motorsteuerung, die ein Abgastemperaturmodell T_Abg_Mdl = Funktion (C1; C2; ...; Lambda_soll) aufweist, **gekennzeichnet durch** Bereitstellen eines inversen Abgastemperaturmodells Lambda_soll = Funktion (C1; C2; ...; T_Ab9-Mdl), wobei eines Lambda-Sollwert für den Bauteilschutz als Eingangsgröße für eine Lambda-Koordination auf der Basis des inversen Abgastemperaturmodells berechnet wird, wobei ein bauteilkritischer Grenzwert T_soll in das inverse Temperaturmodell eingesetzt wird wie folgt:
Lambda_soll_BS = Funktion (T_soll; Funktion_T_Abg_Mdl), wobei die Bauteil-Schultz funktion abgeschaltet wird, wenn der berechnete Lambda-Sollwert größer als der aktive Lambda-Sollwert ist.

2. Verfahren nach Anspruch 1, wobei das Abgastemperaturmodell eine Kennlinie aufweist, die einen Einflußfaktor auf die Abgasmodelltemperatur in Abhängigkeit von Lambda darstellt und wobei diese Kennlinie für das inverse Abgastemperaturmodell in eine invertierte Kennlinie übertragen wird

3. Verfahren zum Steuern einer Bauteilschutzfunktion für einen Katalysator eines Verbrennungsmotors mit einer Motorsteuerung, die ein Abgastemperaturmodell T_Abg_Mdl = Funktion (C1; C2; ...; Lambda_soll) aufweiset, wobei das Abgastemperaturmodell eine Kennlinie aufweist, die einen Einflußfaktor auf die Abgasmodelltemperatur in Abhängigkeit von Lambda darstellt, **gekennzeichnet durch** Bereitstellen eines inversen Abgastemperaturmodells Lambda_soll = Funktion (C1; C2; ...; T_Abg_Mdl), wobei die Kennlinie des Abgastemperaturmodells für das inverse Abgastemperaturmodell in eine invertierte Kennlinie übertragen wird, und **durch** Berechnen eines Lambda-Sollwertes für den Bauteilschutz als Eingangsgröße für eine Lambda-Koordination auf der Basis des inversen Abgastemperaturmodells, wobei ein bauteilkritischer Grenzwert T_soll in das inverse Temperaturmodell eingesetzt wird wie folgt:
Lambda_soll_BS = Funktion (T_soll; Funktion_T_Abg_Mdl).

4. Verfahren nach einem der Ansprüche 1-3, **gekennzeichnet durch** Einschalten der Bauteilschutzfunktion, wenn die berechnete Abgasmodelltemperatur T_Abg_Mdl größer als der bauteilkritische Grenzwert T_soll ist.

5. Verfahren nach Ansprüch 3 oder 4, **gekennzeichnet durch** Ausschalten der Bauteilschutzfunktion, wenn der berechnete Lambda-Sollwert größer als der aktive Lambda-Sollwert ist.

6. Vorrichtung zum Steuern einer Bauteilschutzfunktion für einen Katalysator eines Verbrennungsmotors mit einer Motorsteuerung zur Durchführung eines Verfahrens nach einem der Ansprüche 1-5.

7. Vorrichtung zum Steuern einer Bauteilschutzfunktion für einen Katalysator eines Verbrennungsmotors mit einer Motorsteuerung zur Durchführung eines Verfahrens nach einem der Ansprüche 1-5, mit einer Einrichtung, die ein Abgastemperaturmodell T_Abg_Mdl = Funktion (C1; C2; ...; Lambda_soll) aufweist, wobei das Abgastemperaturmodell eine Kennlinie aufweist, die einen Einflußfaktor auf die Abgasmodelltemperatur in Abhängigkeit von Lambda darstellt, **gekennzeichnet durch** eine Einrichtung, zum Bereitstellen eines inversen Abgastemperaturmodells Lambda_soll = Funktion (C1; C2; ...; T_Abg_Mdl), wobei die Kennlinie des Abgastemperaturmodells für das inverse Abgastemperaturmodell in eine invertierte Kennlinie übertragen wird, und eine Einrichtung zum Berechnen eines Lambda-Sollwertes für den Bauteilschutz als Eingangsgröße für eine Lambda-Koordination auf der Basis des inversen Abgastemperaturmodells, wobei ein bauteilkritischer Grenzwert T_soll in das inverse Temperaturmodell eingesetzt wird wie folgt:
Lambda_soll_BS = Funktion (T_soll; Funktion_T_Abg_Mdl)]

8. Vorrichtung zum Steuern einer Bauteilschutzfunktion für einen Katalysator eines Verbrennungsmotors mit einer Motorsteuerung zur Durchführung eines Verfahrens nach einem der Ansprüche 1-5, mit einer Einrichtung, die ein Abgastemperaturmodell T_Abg_Mdl = Funktion (C1; C2; ...; Lambda_soll) aufweist, wobei das Abgastemperaturmodell eine Kennlinie aufweist, die einen Einflußfaktor auf die Abgasmodelltemperatur in Abhängigkeit von Lambda darstellt, **gekennzeichnet durch** eine Einrichtung zum Bereitstellen eines inversen Abgastemperaturmodells Lambda_soll = Funktion (C1; C2; ...; T_Abg_Mdl), und eine Einrichtung zum Berechnen eines Lambda-Sollwertes für den Bauteilschutz als Eingangsgröße für eine Lambda-Koordination auf der Basis des inversen Abgastemperaturmodells, wobei ein bauteilkritischer Grenzwert T_soll in das inverse Temperaturmodell eingesetzt wird wie folgt: Lambda_soll_BS = Funktion (T_soll; Funktion_T_Abg_Mdl), wobei die Vorrichtung eine Schalteinrichtung zum Einschalten und Ausschalten einer Bauteil-Schutzfunktion aufweist und wobei die Schalteinrichtung die Bauteilschutzfunktion ausschaltet, wenn der berechnete Lambda-Sollwert größer als der aktive Lambda-Sollwert ist.

9. Vorrichtung nach Anspruch 6, 7 oder 8, **gekennzeichnet durch** eine Schalteinrichtung zum Einschalten der Bauteilschutzfunktion, wenn die berechnete Abgasmodelltemperatur T_Abg_Mdl größer als der bauteilkritische Grenzwert T_soll ist.

10. Vorrichtung nach einem der Ansprüche 6, 7 oder 9, **dadurch gekennzeichnet, daß** die Schalteinrichtung die Bauteilschutzfunktion ausschaltet, wenn der berechnete Lambda-Sollwert größer als der aktive Lambda-Sollwert ist.

**Claims**

1. A method for controlling a component protection function for a catalytic converter of an internal combustion engine with an engine control comprising an exhaust gas temperature model T_Abg_Mdl = Funktion (C1; C2; ...; Lambda_soll), **characterised by** providing an inverse exhaust gas temperature model Lambda_soll = Funktion (C1; C2;

... ; T_Abg_Mdl), wherein a lambda target value for the component protection is calculated as input value for a lambda coordination on the basis of the inverse exhaust gas temperature model, wherein a limit value T_soll critical for the component is inserted in the inverse temperature model as follows:

Lambda_soll_BS = Funktion (T_soll; Funktion_T_Abg_Mdl), wherein the component protection function is deactivated if the calculated lambda target value is higher than the active lambda target value.

2. The method according to claim 1, wherein the exhaust gas temperature model comprises a characteristic representing an influencing factor on the exhaust gas model temperature depending on lambda and wherein this characteristic for the inverse exhaust gas temperature model is transformed into an inverted characteristic.

3. The method for controlling a component protection function for a catalytic converter of an internal combustion engine with an engine control comprising an exhaust gas temperature model T_Abg_Mdl = Funktion (C1; C2; ...; Lambda_soll), wherein the exhaust gas temperature model exhibits a characteristic representing an influencing factor on the exhaust gas model temperature depending on lambda, **characterised by** providing an inverse exhaust gas temperature model Lambda_soll = Funktion (C1; C2; ...; T_Abg_Mdl), wherein the characteristic of the exhaust gas temperature model for the inverse exhaust gas temperature model is transferred into an inverted characteristic, and by calculating a lambda target value for the component protection as input value for a lambda coordination on the basis of the inverse exhaust gas temperature model, wherein a limit value T_soll critical for the component is inserted in the inverse temperature model as follows: .

Lambda_soll_BS = Funktion (T_soll; Funktion_T_Abg_Mdl).

4. The method according to any one of claims 1 to 3, **characterised by** activating the component protection function if the calculated exhaust gas model temperature T_Abg_Mdl is higher than the limit value T_soll critical for the component.

5. The method according to claim 3 or 4, **characterised by** deactivating the component protection function when the calculated lambda target value is higher than the active lambda target value.

6. An apparatus for controlling a component protection function for a catalytic converter of an internal combustion engine with an engine control for carrying out a method according to any one of claims 1 to 5.

7. An apparatus for controlling a component protection function for a catalytic converter of an internal combustion engine with an engine control for carrying out a method according to any one of claims 1 to 5 with means comprising an exhaust gas temperature model T_Abg_Mdl = Funktion (C1; C2; ...; Lambda_soll), wherein the exhaust gas temperature model exhibits a characteristic representing an influencing factor on the exhaust gas model temperature depending on lambda, **characterised by** means for providing an inverse exhaust gas temperature model Lambda_soll = Funktion (C1; C2; ...; T_Abg_Mdl), wherein the characteristic of the exhaust gas temperature model for the inverse exhaust gas temperature model is transferred into an inverted characteristic, and means for calculating a lambda target value for the component protection as input value for a lambda coordination on the basis of the inverse exhaust gas temperature model, wherein a limit value T_soll critical for the component is inserted in the inverse temperature model as follows:

Lambda_soll_BS = Funktion (T_soll; Funktion_T_Abg_Mdl).

8. An apparatus for controlling a component protection function for a catalytic converter of an internal combustion engine with an engine control for carrying out a method according to any one of claims 1 to 5 with means comprising an exhaust gas temperature model T_Abg_Mdl = Funktion (C1; C2; ...; Lambda_soll), wherein the exhaust gas temperature model comprises a characteristic representing an influencing factor on the exhaust gas model temperature depending on lambda, **characterised by** means for providing an inverse exhaust gas temperature model Lambda_soll = Funktion (C1; C2; ...; T_Abg_Mdl), and means for calculating a lambda target value for the component protection as input value for a lambda coordination on the basis of the inverse exhaust gas temperature model, wherein a limit value T_soll critical for the component is inserted in the inverse temperature model as follows:

Lambda_soll_BS = Funktion (T_soll; Funktion_T_Abg_Mdl), wherein the apparatus comprises a switching means for activating and deactivating a component protection function and wherein the switching means deactivates the component protection function when the calculated lambda target value is higher than the active lambda target value.

9. The apparatus according to claim 6, 7 or 8, **characterised by** a switching means for activating the component protection function when the calculated exhaust model temperature T_Abg_Mdl is higher than the limit value T_soll critical for the component.

10. The apparatus according to any one of claim 6, 7 or 9, **characterised in that** the switching means deactivates the component protection function when the calculated lambda target value is higher than the active lambda target value.

**Revendications**

1. Procédé de contrôle d'une fonction de protection d'un composant pour un catalyseur d'un moteur à combustion interne, comprenant un système de gestion du moteur qui présente un modèle de température des gaz d'échappement T_Abg_Mdl = fonction (C1 ; C2 ; ...; lambda théorique), **caractérisé par** la fourniture d'un modèle inverse de la température des gaz d'échappement lambda_théorique = fonction (C1 ; C2 ; ...; T_Abg_Mdl), où, sur la base du modèle inverse de la température des gaz d'échappement, on calcule, pour la protection d'un composant, une valeur théorique lambda servant de variable initiale pour une coordination lambda, où une valeur limite T_théorique critique pour le composant est intégrée, comme suit, au modèle de température inverse : lambda_théorique_BS = fonction (T_théorique ; fonction_T_Abg_Mdl), où la fonction de protection du composant est interrompue lorsque la valeur théorique lambda calculée est supérieure à la valeur théorique lambda active.

2. Procédé selon la revendication 1, où le modèle de température des gaz d'échappement présente une courbe caractéristique qui, en fonction de lambda, représente un facteur d'influence sur la température du modèle de gaz d'échappement, et où cette courbe caractéristique est transposée dans une courbe caractéristique inversée pour le modèle inverse de la température des gaz d' échappement .

3. Procédé de contrôle d'une fonction de protection d'un composant pour un catalyseur d'un moteur à combustion interne, comprenant un système de gestion du moteur qui présente un modèle de température des gaz d'échappement T_Abg_Mdl = fonction (C1; C2; ...; lambda_théorique), où le modèle de température des gaz d'échappement présente une courbe caractéristique qui, en fonction de lambda, représente un facteur d'influence sur la température du modèle de gaz d'échappement, **caractérisé par** la fourniture d'un modèle inverse de la température des gaz d'échappement lambda_théorique = fonction (C1 ; C2 ; ...; T_Abg_Mdl), où la courbe caractéristique du modèle de température des gaz d'échappement est transposée dans une courbe caractéristique inversée pour le modèle inverse de la température des gaz d'échappement, et où, sur la base du modèle inverse de la température des gaz d'échappement, on calcule, pour la protection d'un composant, une valeur théorique lambda servant de variable initiale pour une coordination lambda, où une valeur limite T_théorique critique pour le composant est intégrée, comme suit, au modèle de température inverse : lambda_théorique_Bs = fonction (T_théorique ; fonction_T_Abg_ Mdl).

4. Procédé selon l'une quelconque des revendications 1 à 3, **caractérisé par** le démarrage de la fonction de protection d'un composant, lorsque la température, calculée, du modèle de gaz d'échappement T_Abg_Mdl est supérieure à la valeur limite T_théorique critique pour le composant.

5. Procédé selon la revendication 3 ou 4, **caractérisé par** l'arrêt de la fonction de protection d'un composant, lorsque la valeur théorique lambda calculée est supérieure à la valeur théorique lambda active.

6. Dispositif de contrôle d'une fonction de protection d'un composant pour un catalyseur d'un moteur à combustion interne, comprenant un système de gestion du moteur pour la mise en oeuvre d'un procédé selon l'une quelconque des revendications 1 à 5.

7. Dispositif de contrôle d'une fonction de protection d'un composant pour un catalyseur d'un moteur à combustion interne, comprenant un système de gestion du moteur pour la mise en oeuvre d'un procédé selon l'une quelconque des revendications 1 à 5, comprenant un dispositif qui présente un modèle de température des gaz d'échappement T_Abg_Mdl = fonction (C1 ; C2 ; ...; lambda_théorique), où le modèle de température des gaz d'échappement présente une courbe caractéristique qui, en fonction de lambda, représente un facteur d'influence sur la température du modèle de gaz d'échappement, **caractérisé par** un dispositif servant à fournir un modèle inverse de la température des gaz d'échappement lambda_théorique = fonction (C1 ; C2 ; ...; T_Abg_Mdl), où la courbe caractéristique du modèle de température des gaz d'échappement est transposée dans une courbe caractéristique inversée pour le modèle inverse de la température des gaz d'échappement, et par un dispositif servant au calcul, sur la base du modèle inverse de la température des gaz d'échappement, d'une valeur théorique lambda pour la protection d'un composant, ladite valeur théorique lambda servant de variable initiale pour une coordination lambda, où une valeur limite T_théorique critique pour le composant est intégrée, comme suit, au modèle de température inverse : lambda_ théorique_BS = fonction (T_théorique ; fonction_T_Abg_Mdl).

8. Dispositif de contrôle d'une fonction de protection d'un composant pour un catalyseur d'un moteur à combustion interne, comprenant un système de gestion du moteur pour la mise en oeuvre d'un procédé selon l'une quelconque des revendications 1 à 5, comprenant un dispositif qui présente un modèle de température des gaz d'échappement T_Abg_Mdl = fonction (C1 ; C2 ; ...; lambda_théorique), où le modèle de température des gaz d'échappement présente une courbe caractéristique qui, en fonction de lambda, représente un facteur d'influence sur la température du modèle de gaz d'échappement, **caractérisé par** un dispositif servant à fournir un modèle inverse de la température des gaz d'échappement lambda_théorique = fonction (C1; C2 ; ...; T_Abg_Mdl), et par un dispositif servant au calcul, sur la base du modèle inverse de la température des gaz d'échappement, d'une valeur théorique lambda pour la protection d'un composant, ladite valeur théorique lambda servant de variable initiale pour une coordination lambda, où une valeur limite T_théorique critique pour le composant est intégrée, comme suit, au modèle de température inverse: lambda_théorique_BS = fonction (T_théorique ; fonction_T_Abg_Mdl), où le dispositif présente un dispositif de commande pour le démarrage et l'arrêt d'une fonction de protection d'un composant, et où le dispositif de commande interrompt la fonction de protection d'un composant lorsque la valeur théorique lambda calculée est supérieure à la valeur théorique lambda active.

9. Dispositif selon l'une quelconque des revendications 6, 7 ou 8, **caractérisé par** un dispositif de commande servant au démarrage de la fonction de protection d'un composant, lorsque la température, calculée, du modèle de gaz d'échappement T_Abg_Mdl est supérieure à la valeur limite T_théorique critique pour le composant.

10. Dispositif selon l'une quelconque des revendications 6, 7 ou 9, **caractérisé en ce que** le dispositif de commande interrompt la fonction de protection d'un composant lorsque la valeur théorique lambda calculée est supérieure à la valeur théorique lambda active.

**Figur 1**

andere Einflüsse →

Lambda_soll_aktiv

Lambda_soll_BS

Lambda Koordination — 4

Abgastemperaturmodell — 1

$T\_Abgas\_Mdl = f\_T\_Abgas\_Mdl\,(C1;C2;...;Lambda)$

Modelltemperatur

T_Abgas_Mdl

→ weitere Funktionen

*Konventionelles* Modell — 2

Bauteilschutzmodell:

• $Lambda = f(T\_Soll,\ X,Y,Z,...)$

• Kalibrierparameter: A,B,C,...

*Neues* Modell — 3

Bauteilschutzmodell:

• $Lambda = f(T\_Soll;\ f\_T\_Abgas\_Mdl)$

• Kalibrierparameter : T_Soll

EP 1 329 627 B1

Bauteilschutz

aktiv

passiv

T

**Figur 2**

T_Soll =Grenzwert

T_Abgas_Mdl_stat
stationäre
Abgasmodelltemperatur
------------
T_Abgas_Mdl_ohne
Abgasmodelltemperatur
ohne
Bauteilschutzmodell
___ __ ___
T_Abgas_Mdl_BS
Abgasmodelltemperatur
mit
Bauteilschutzmodell

Lambda

Lambda soll aktiv
_____

Lambda soll BS
___ ___ ___ .

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19928561 A1
- US 5857163 A
- US 5570575 A
- US 6286305 B
- EP 0890724 A